# EUROPEAN PATENT APPLICATION

(11) **EP 4 206 305 A1**
(43) Date of publication of application: **05.07.2023**
(21) Application number: 21218502.9
(22) Date of filing: 31.12.2021
(51) Int. Cl.: C10B 49/14, C10B 53/07, C10J 3/57

(54) **A PROCESS TO CONVERT A THERMOPLASTIC POLYMER WASTE IN AN ANHYDROUS HYDRATABLE MOLTEN SALT BATH**

(71) Applicant: Yerrawa B.V., 3871 KM Hoevelaken (NL)
(72) Inventor: O'CONNOR, Paul, 3871 KM HOEVELAKEN (NL); BABICH, Igor, 7545 GM Enschede (NL)
(74) Representative: Hoyng Rokh Monegier B.V.

(57) **Abstract**

The invention relates to a process to convert a thermoplastic polymer containing waste (TPW) providing effective carbonization to produce hydrogen and carbon, said process comprising providing a reactor and the TPW and purging oxygen from the reactor and from the waste feed with steam, contacting and mixing in the reactor the TPW with an anhydrous hydratable molten salt (AMS) and converting the TPW into a conversion gas and a reaction mixture comprising non-volatile conversion products including carbon (NVC) in the AMS, collecting conversion gas, adding water or steam to the reaction mixture to cool the reaction mixture and convert the AMS to hydrated molten salt (HMS) whereby phase separation occurs between a NVC phase and a HMS phase, separating the NVC phase from the HMS phase, heating the obtained HMS phase to convert to AMS and steam and recycling the obtained AMS and steam back in the process.

## Description

### BACKGROUND OF THE INVENTION

### 1. Field of the Invention

The invention relates generally to a process to convert a thermoplastic polymer containing waste (TPW), providing effective carbonization to produce hydrogen and carbon.

### 2. Description of the Related Art

In view of the environmental problems caused by plastics and the difficulty to re-use plastics, a lot of R&D effort is spent in converting plastic to fuels, hydrogen, carbon, etc.

US2015/0001061 describes a waste-to-plastic-to-fuel process comprising a premelt reactor for melting the plastics prior to pyrolysis.

US2012/0261247 describes a process wherein plastic material is processed to granules or flakes and heated to melt before entering a pyrolysis reactor which is provided with an agitator being a double helical agitator screw with helical blades sweeping at about 5mm from the chambers internal surface to improve heat transfer.

US7758729 describes a low temperature waste to fuel (WTF) process comprising a vacuum system to remove vapor from a pyrolytic thermal treatment chamber comprising a series of graduated temperature set points wherein each graduated temperature set point corresponds to a vaporization temperature of an individual by-product of said plastic material, and pulling a vacuum of inert gas on the treatment chamber at each temperature set point to selectively remove an individual by-product corresponding to the temperature set point.

The described processes have the disadvantage that they operate at very high temperatures and that the heat transfer is not fast, which makes the process more complex, costly and difficult to control towards value added end products. Therefore, efforts have been made to convert plastics in molten salts at lower temperature.

Alamer, A., & Awaji, M. describe in an Undergraduate Thesis with the title "Molten Salt Pyrolysis of Waste Polystyrene", (2014), Worcester Polytechnic Institute a single pot pyrolysis technique of waste polystyrene by employing eutectic molten salt mixtures to attain high styrene yields at varied conditions. Molten salts provide an excellent heat transfer medium with low viscosity and eutectic molten salts are used here because they have low melting temperature. The process uses helium as inert gas to avoid combustion and process hazard. Alamer *et. al.* only focusses on the pyrolysis step to study influence of tertiary mixture composition, temperature, etc., on the pyrolysis and does not describe an economic feasible process for recovering hydrogen and carbon from such process.

Chambers, et.al. describe an article in Industrial & Engineering Chemistry Process Design And Development, 23(4), 648-654 with the title: "Polymer waste reclamation by pyrolysis in molten salts" (1984) a process the pyrolysis of a polymer waste feed originating from the reclamation of automobile shredder waste comprising shredded tyres, plastics and other waste materials, using molten salts as pyrolysis media at temperatures between 380 and 570°C. The process involves grinding in liquid nitrogen. The process uses dry nitrogen as inert gas to avoid combustion and process hazard. Therefore the process is expensive and not practical. The resulting product is mostly char, which is a product of low value. Chambers focusses only on the pyrolysis step to study influence of molten salt type, temperature, etc. on the pyrolysis and does not describe an economic feasible process for converting waste material to hydrogen and carbon from such process.

The described processes have one or more of the disadvantages that they require very high energy input, that they can be economically feasible only at an economy of scale requiring huge investments, that they have unacceptable environmental impact, that they achieve a low yield of valuable products formed; in particular a relatively low hydrogen and carbon yield and that also toxins can be formed, such as di-olefins, nitrosamines, polyaromatic compounds, etc. which end up in the gas, liquid or water phase leading to extra costs derived from the treatment of these toxic streams.

The object of the invention is to provide a process to convert a thermoplastic polymer containing waste feed, providing effective carbonization to produce a good yield of hydrogen and carbon in an economically and environmentally attractive process while producing no or minimal CO₂ emissions, thereby resulting in negative overall CO₂ emissions.

### BRIEF SUMMARY OF THE INVENTION

The present invention addresses these problems by providing a process to convert a thermoplastic polymer containing waste (TPW) said process comprising the following steps:
a) Providing a reactor and the TPW and purging oxygen from the reactor and from the waste feed with steam,
b) contacting and mixing in the reactor the TPW with an anhydrous hydratable molten salt (AMS),
c) converting the TPW at a temperature T₁ between 200 °C to 500 °C and a pressure below 15 bar, preferably below 10 bar, in absence of oxygen and in presence of steam as inert gas forming a conversion gas and a reaction mixture comprising non-volatile conversion products including carbon (NVC) in the AMS,
d) collecting conversion gas from an outlet on the reactor, optionally assisted by purging with steam,
e) adding water or steam to the reaction mixture to cool the reaction mixture and convert the AMS to hydrated molten salt (HMS) whereby phase separation occurs between a NVC phase and a HMS phase,
   i. wherein additionally cooling can be done by external cooling means,
f) separating the NVC phase from the HMS phase
   i. wherein the cooling and separation steps e) and f) comprise one or more subsequent cooling and separation steps,
   ii. wherein preferably the reaction mixture is cooled and hydrated to a temperature TI below 200 °C
   iii. OR wherein at least part of the reaction mixture is cooled to a temperature Th above 200 °C, preferably above 300 °C, wherein optionally pressure is applied which pressure is preferably applied with steam,
   iv. OR wherein two or more subsequent cooling and separation steps are applied at different temperatures, preferably first a step iii) at high temperature Th and then a step ii) at low temperature TI, wherein two or more different NVC fractions with different compositions are obtained,
g) heating the obtained HMS phase to convert to AMS and steam,
h) using AMS obtained in step g) in step b)
i) using the steam obtained in step g) in the process, preferably in step a) for purging oxygen from the reactor and/or in step e) for hydration of the AMS.

It was found that in the process of the invention the thermoplastic polymer containing waste feed (TPW) is very efficiently carbonized in the anhydrous hydratable molten salt (AMS). The TPW can be effectively mixed and dissolved or dispersed in the AMS providing very good heat transfer efficiency. The metal of the AMS and optional additional metals dissolved in the AMS can also provide catalytic effect on the carbonisation conversion. The pressure in the reactor is low as there is open contact with the atmospheric pressure to allow water in the reactor to evaporate and be removed from the reactor. Preferably, there is some over-pressure applied by steam as purge gas to prevent oxygen to get into the reactor. The pressure is below 15, preferably below 10 and more preferably below 5 bar. At the high temperatures and at the low pressure used in the process the hydratable molten salt stays substantially anhydrous. Any residual water present in the TPW feed or any water formed during the carbonisation process will, at the low pressure and high temperature conditions, not hydrate the AMS but will evaporate as steam which is removed from the reactor. The steam can be used as the inert media during the carbonization of organic wastes in a molten salt melt, which makes the process simple and cost effective compared to prior art processes that have to use nitrogen or helium as inert gas. Apart from that, the steam as low cost inert gas can be easily be condensed in a continuous separation process and recycled in the process, which presents an environmental and cost advantage. A particular advantage is that steam can be continuously separated by condensation from the conversion gasses formed.

It was further found that the process of the invention allows easy and effective separation of the carbon produced by hydrating the molten salt. The process results in higher yield of H₂, with minimal C1-C4, CO and CO₂ production and minimum toxic by-product formation. Exact numbers will depend on type of feedstock. This is a significant advantage compared to a pyrolysis process, where many small molecules (di-oxins etc) are produced in the oil and water phase. In the process of the invention these materials small molecules are fully converted and/or absorbed by the Carbon formed in the process which acts as an Active Carbon adsorbent.

WO2018141911A describes a methane reformer process for hydrogen production. The process comprises carbonisation of hydrocarbons such as hydrocarbon fuels, in particular natural gas in a Zinc-chloride hydrate molten solvent to produce hydrogen and carbon. However, this does not describe using thermoplastic polymer waste as a feed or the anhydrous conditions during conversion. The inventors found that the process in this prior art cannot be used for thermoplastic polymers (hereafter also plastics) because plastics melt and phase separate from the solvent before they carbonize with the result that heat transfer is impaired.

### BRIEF DESCRIPTION OF THE DRAWINGS

The features and advantages of the invention will be appreciated upon reference to the following drawings, in which:

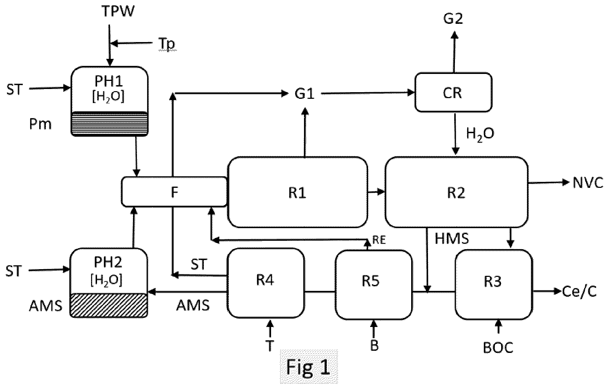

FIG. 1 is a schematic drawing of one embodiment of the process of the invention.

### DETAILED DESCRIPTION OF THE INVENTION

The invention relates to a process to convert a thermoplastic polymer containing waste (TPW) preferably comprising at least 50, more preferably at least 60 wt.% thermoplastic polymers (TP). The waste stream may comprise next to TP also organic materials different from TP, such as biopolymers like cellulose, hemicellulose or thermoset polymers materials. These organic materials can also be converted in the process of the invention but they can produce undesired side products like char and reduce the yield and purity of the obtained carbon and hydrogen and additional purification steps may be needed. To maximise the yield of conversion products in the process and to avoid process complications and additional purification steps, the TPW preferably comprises as much as possible of thermoplastic polymers. The cleaner and the more uniform the feed the better. Preferably, the TPW comprises at least 70, 80 or most preferably at least 90 wt.% TP and preferably less than 40, more preferably less than 30 and even more preferably less than 20 wt.% of thermoset polymers and preferably also comprising less than 20 wt.% other waste feed components.

The TPW used in the present invention typically comprises one or more TP selected from the group of polypropylene, Polyethylene, Polyester, Polyvinylacetate, Polyvinylalcohol, Polyvinylchloride or mixtures, copolymers, blends or composites thereof, preferably TP not comprising heteroatoms O, N or halogen, most preferably polyolefins in view of maximizing yield and purity of the conversion products.

It is preferred that raw waste streams are pre-treated to largely remove the non-organic materials such as metals, sand etc. and preferably also non-polymeric waste components. Organic materials such as cellulose and other organic biopolymers can be converted in the process but that is not preferred. Firstly, it has value to separate and recycle or re-use them. Further, carbohydrates generate water during carbonisation, which is not preferred in the process. Hence, preferably the TPW is purified to at least 60 wt% TP.

If municipal waste is used in the process according to the present invention, it is preferably cleaned from metal parts, sand, glass, etc., and/or dried to remove water.

The process to convert the TPW comprises, in step a), providing a reactor and the TPW and purging oxygen from the reactor and from the waste feed with steam,

Step b) of the process comprises contacting and mixing in the reactor the TPW with an anhydrous hydratable molten salt (AMS). The reactor is preferably a stirred reactor.

Thereafter, step c) comprises converting the TPW at a temperature T1 between 200 °C and 500 °C , preferably between 220 °C and 500 °C more preferably between 250 °C and 500 °C and a pressure below 15 bar, preferably below 10 bar, more preferably below 8 bar in absence of oxygen and in presence of steam as inert gas forming a conversion gas and a reaction mixture comprising non-volatile conversion products including carbon (NVC) in the AMS. The conversion temperature is low compared to prior art pyrolysis processes, which is a great advantage in reducing energy costs of the process and in reducing complexity. A particular further advantage is that the hydrogen production is enhanced at lower temperatures. Lower temperatures are also preferred in view of energy consumption whereas higher temperatures are preferred in view of yield and speed. The optimum balance can be found by the skilled person in each case depending on TPW specific composition and end desired products.

Step d) of the process comprises collecting conversion gas from an outlet on the reactor, optionally assisted by purging with steam. As described above, it is preferred that some over-pressure is generated in the reactor by the steam purge gas to avoid that oxygen can get into the reactor.

Thereafter, step e) comprises adding water or steam to the reaction mixture to cool the reaction mixture and convert the AMS to hydrated molten salt (HMS) whereby phase separation occurs between a NVC phase and a HMS phase, wherein additionally cooling can be done by external cooling means. The low density and hydrophilic NVC products float to the surface of the HMS where it can be easily removed.

Step f) comprises separating the NVC phase from the HMS phase, wherein the cooling and separation steps e) and f) comprise one or more subsequent cooling and separation steps. Preferably, the reaction mixture is cooled and hydrated to a temperature TI below 200 °C. At the lower temperature TI, the solid or liquid carbon phase is separated from the molten salt. The advantage of the low temperature separation step is the high yield of separated NVC. Lower temperatures provide a higher yield. It is a particular advantage of the use of hydratable molten salt that it is possible to go to low temperatures by lowering the melting temperature of the molten salt by hydrating the anhydrous molten salt to form a molten salt hydrate. The lower temperature combined with the change in solvent quality of the HMS compared to the AMS makes it is relatively easy to separate the solid or liquid carbon phase.

Cooling to low temperature TI is preferred in view of the yield of NVC. However, cooling to a relatively high temperature Th is preferred in view of energy consumption. In an alternative embodiment, at least part of the reaction mixture is cooled to a temperature Th above 200 °C, preferably above 300 °C, wherein optionally pressure is applied which pressure is preferably applied with steam. It is an advantage of said high temperature separation step that less cooling requires less energy input at the subsequent dehydrating and reheating step. Further, at higher temperatures, a NVC fraction may be separated having a different composition than the NVC separated after direct cooling to low temperatures TI below 200 °C.

The reaction mixture can be cooled from the carbonisation temperature T1 in one step but can also be cooled in two or more steps; steps meaning temperature intervals. For example, a first cooling step can be done to a relatively high temperature Th followed for example by a waiting time to allow phase separation, a transfer to another reactor, a separation step or a purification step followed by a second further cooling step.

It may be a disadvantage that not all NVC separates from the HMS. Hence, in the case a high temperature Th is used, it is preferably followed by a lower temperature separation step. Optionally, only a part of the reaction mixture is cooled to temperature Th and the remaining part is cooled to TI.

In a further alternative embodiment two or more subsequent cooling and separation steps are applied at different temperatures, preferably first a step at high temperature Th and then a step at low temperature TI, wherein two or more different NVC fractions with different compositions are obtained, It is an advantage of this alternative step that two or more different NVC fractions with different compositions could be obtained with higher quality product.

After separation of the NVC phase from the HMS phase, step g) comprises heating the obtained HMS phase to convert to AMS and steam. Preferably, the HMS produced in step e) is heated in step g) to a T2 above 250 °C, preferably above 300 °C, wherein the HMS is converted into the AMS and steam.

A particular advantage is that the solvent in all steps is molten salt either in AMS form or in HMS form which only involves addition and removal of water which as steam can be used as the inert purge gas and also can be recycled. Therefore, Step h) comprises using the AMS obtained in step g) in step b) and Step i) comprises using the steam obtained in step g) in the process, preferably in step a) for purging oxygen from the reactor and/or in step e) for hydration of the AMS.

In the process according to the present invention, the AMS is a hydratable metal halide salt, wherein the metal preferably is Zinc, Aluminum, Antimony, Calcium, Iron or Magnesium or combinations thereof, preferably ZnCl₂, FeCl₃, or blends thereof, most preferably the AMS comprises at least 70 wt.%, more preferably at least 80 wt% even more preferably at least 90 wt% and most preferably at least 95 wt% ZnCl₂ with the remainder of the AMS preferably being one or more other metal halide salts, preferably AlCl₃, SbCl₃ or FeCl₃.

ZnCl₂ is a very suitable medium for carbonization at high temperatures as I has a very low vapor pressure. It is a particular advantage of the process using ZnCl₂ that, when increasing the temperature, there is hardly no increase in pressure. As the pressure is rather low, the investment in equipment is also low. This is favorable compare to other molten salts, such as AlCl₃, which have a much higher vapor pressure. Thus, the pressure is not critical and for reason of convenience atmospheric or ambient pressure is preferred during the conversion step of TPW. However, higher pressures may be used, preferably below 10 bar.

In the process according to the present invention, the molten salt in step b) is anhydrous. Small amounts of water can be tolerated. Therefore, AMS means a molten salt that comprises less than 20 wt.% hydrated water relative to the total weight of the AMS and water, preferably less than 10 wt%, more preferably less than 5 wt.% or even more preferably less than 3 wt.% and most preferably less than 1 wt%. The hydrated molten salt HMS formed in step e) comprises between 10 and 60 wt.% water, preferably between 15 and 50 wt.% and more preferably between 15 and 35 wt.% wherein wt% is relative to the total weight of AMS and wherein preferably the AMS is ZnCl₂ and the HMS is ZnCl₂ hydrate. In any case, the HMS comprises at least 10, more preferably at least 20, even more preferably at least 25 or 30 wt% more water than the AMS to make the change in solvent quality to phase separate the NVC from the reaction mixture.

In the process according to the invention, a solid carbon source or a precursor thereof is added, preferably in step b) and/or e), as a seed to enhance the conversion and/or separation of the carbon phase from the molten salt phase. It is believed that the solid carbon catalyzes the conversion reaction and may nucleate the formation and growth of the carbon phase. Examples of a solid carbon source are charcoal, carbon black, carbon fibers, carbon nano-fibers, etc. A solid source precursor is a compound that in the molten salt is directly converted to a solid carbon source, for example cellulose or lignin.

In a useful embodiment, the conversion gas collected in step d) is further separated into water, H₂ and C1-C4 hydrocarbons, optionally after cooling and condensation. The carbonization process of the invention results in higher yield of H₂, with minimal C1-C4, CO and CO₂ production. The exact production numbers will depend on type of feedstock. In case H₂ and/or pure carbon production is to be optimized, cellulose is removed beforehand from the TPW. Optionally, sulfur can be captured to avoid formation of H₂S. The water separated in step d) may be used in the hydration step wherein the AMS is converted to HMS or used as steam to purge oxygen from the reactor.

It is an advantage of the process that, by using water vapor as the inert media during the carbonization of organic wastes in a molten salt melt, a much more simple and cost effective process route is achieved whereby besides the role of the water vapor as low cost inert gas, the water can also be used to swing back to the molten salt hydrate phase at low temperatures to enable an effective separation of the carbon produced from the molten salt hydrate. A further advantage of the process is that the conversion gases can easily be separated from the inert purge gas by simple condensation of the inert gas, in this case steam to water.

In the process according to the present invention, the molten salt further comprises catalytic amounts of one or more dehydrogenation catalyst metals different from the metal in the molten salt, preferably chosen from the group of Ni, Fe, Zn or Cu, to enhance hydrogen yield in the process, preferably added in the form of a metal-organic complex like metal alkyls, metal-oxides or a metal-chloride complex, and preferably in an amount of less than 10, preferably less than 5 or even less than 3 mole% of said metal relative to the moles of metal in the molten salt, wherein the one or more dehydrogenation catalyst are preferably chosen from the group of FeCl₃, NiCI, CuCl₂, Fe₂O₃, NiO and CuO and wherein the one or more dehydrogenation catalyst metals are optionally supported on a solid carbon source or a precursor thereof. The use of a dehydrogenation catalyst is particularly preferred as it allows for the use of relatively low conversion temperatures. Most preferred is using ZnCl₂ molten salt with Ni or Fe metal ions as dehydrogenation catalyst metals. It is particularly preferred to use Fe as active metal enabling a magnetic separation of the active metal catalyst from the carbon source.

Optionally, the one or more dehydrogenation catalyst metals are supported on a solid carbon source or precursor thereof. The solid carbon source or precursor thereof for use as seed during the reaction and/or separation step or as support for the one or more dehydrogenation catalyst metals are same or different compound selected from carbon fiber, lignin, cellulosic fiber, carbon nanofiber or carbon nanotube.

Alternatively, the one or more dehydrogenation catalyst metals may be added to the TPW before contacting in the reactor with the AMS.

In case the TPW comprises significant amounts of heteroatoms such as N, O, S, P or halogens, it is preferred that in the process one or more reactants are added to the AMS to convert hetero-atom containing impurities formed during conversion step c); in particular to convert one or more of halogens, CO₂, SOₓ or NOₓ Preferably, the reactant reacts with the impurity to form a precipitate which then can be separated. Preferably the reactant is a metal compound, more preferably metal oxide or metal hydroxide, even more preferably zinc oxide, magnesium oxide, iron oxide or nickel oxide, to react with halogens, CO₂, SOₓ or NOₓ to form one or more of metal-halogenides, metal-carbonates, metal-sulfates, or metal-nitrates. In case the heteroatom is a halogen, for example from a PVC polymer, the halogen gas formed during conversion (e.g. Cl₂) is converted with a metal oxide to a metal halide. This metal halide can be separated or becomes part of the AMS used in the process and does not need to be separated.

For example, oxygen containing compounds degrade to generate CO₂, which can be captured by metal-oxides to produce metal-carbonates. PVC or halogen-based flame retardants in TPW produce halogens when contacted with the molten salt. These halogens can react with the metal oxides, reducing toxic halogen emissions. In a preferred embodiment the reactant is zinc oxide, which can react with the chlorine formed in the degradation of PVC to produce ZnCl₂, which is the preferred molten salt and can be then used in the process. In case the contaminant heteroatom comprises Br or F, the reactant zinc oxide forms the reaction product ZnBr₂ or ZnF₂ respectively. Bromides can be removed by addition of MgO. In a most preferred embodiment the AMS used in the process is Zinc-Chloride and in the process to convert halogen containing TPW, in particular halogen containing TP, Zinc-oxide is added as reactant to form Zinc chloride. In the case of sulfur containing compounds, they degrade to produce SOₓ which can be reacted with metal oxide to produce metal-sulfates or react directly to produce metal-sulfides. Zn halogenide can be converted by contacting with NaOH to form Zn(OH)₂ (ZnCl₂ + NaOH = Zn(OH)₂ + NaCI) which precipitates and can be separated. When the obtained Zinc hydroxide is heated it leads to the formation of zinc oxide, which can be used as reactant in the process.

In the process according to the invention the HMS produced in step e) is used in a separate step e.1) before being converted to AMS in step h) for the separation or carbonization of biological organic waste, preferably a biological organic waste comprising cellulose, hemicellulose and/or lignin, at a temperature below 300 °C, preferably below 250 °C.

In the process according to the present invention, the NVC phase separated in step f) is washed with water at a temperature below 100 °C to dissolve and remove residue of the molten salt and preferably recycling the wash water to step e).

It is preferred that the energy required in the process for heating and conversion is produced by the combustion of hydrogen produced in the process. An advantage of the process is that the energy obtained from the conversion of TPW would generally be higher than the energy required for the process itself.

It is a particular advantage of the process that the solid carbon phase separated from the HMS can produce or can be used to produce valuable higher quality carbon materials. Preferably, the carbon phase can produce or can be used to produce active carbon (i.e. sorbents), soil enhancement compounds, electronic materials, carbon fiber, carbon nano fiber or a carbon nanofiber precursor, graphene or graphene precursor (i.e. materials). The formed products after isolation can also be used as seed in the same process.

The present invention further relates to a process wherein TPW is converted in a continuous process comprising continuously:
1)feeding a TPW feed and AMS to a first reactor and at least partly converting the TPW to the conversion gas and carbon in the reaction mixture,
2) taking the conversion gas from the top of the first reactor and separating and transferring part of the formed reaction mixture to a second reactor,
3) adding water or steam to the reaction mixture in the second reactor to cool the reaction mixture and convert the AMS to HMS forming a phase separated NVC phase and HMS phase,
4) separating and transferring the HMS phase out of the second reactor,
5) optionally transferring the HMS from the second reactor to a third reactor for the separation or carbonization of biological organic waste and separating the HMS after use in this step,
6) transferring the HMS from the second and/or third reactor to a fourth reactor and heating in the fourth reactor the HMS phase to convert to AMS and steam and recycling the AMS back to the first reactor,
7) wherein optionally impurities are removed from the HMS phase and/or from the obtained AMS prior to recycling back to the first reactor,
8) removing the NVC phase from the second reactor continuously or semi- continuously, optionally followed by washing the NVC phase with water to remove residue of the molten salt, optionally followed by recycling part of the NVC phase, or of solid carbon isolated from the separated NVC phase, back to the first reactor as seed to enhance the conversion and/or separation of the NVC,
wherein preferably at least part of the mixing and/or reaction is carried out in a static mixer, preferably a catalytic static mixer comprising catalytically active internal surfaces.

### DESCRIPTION OF ILLUSTRATIVE EMBODIMENTS

FIG. 1 is a schematic drawing of one embodiment of the process of the invention wherein thermoplastic waste feed TPW is fed to a preheater PH1 wherein oxygen is purged with steam ST and temperature is raised to a temperature Tp to melt the TP in the TPW feed forming polymer melt Pm and the AMS is preheated in preheater PH2 under steam atmosphere ([H₂O]) before feeding to the first reactor R1. In an alternative the TPW and AMS can also be mixed and heated in a different order or fed directly to the reactor R1.

The polymer melt Pm and preheated AMS are mixed and fed via a feed unit F (e.g. an extruder or in-line mixer) to the first reactor R1 where TP is converted to conversion gas G1, which comprises predominantly hydrogen and steam, which is let off at the top. The reaction mixture comprising AMS and the non-volatile conversion products is transferred to separation reactor R2.

In reactor R2 water or steam is added to the reaction mixture to cool the reaction mixture and convert the AMS to hydrated molten salt (HMS) forming a phase separated NVC phase and HMS phase. Preferably, recycled steam or condensed steam is used from gas separator CR wherein steam in gas G1 is condensed to separate water and produce a water free conversion gas G2.

The HMS phase is separated and transferred out of the second reactor R2 for recycling. Optionally, at least part of the HMS phase is transferred from the second reactor R2 to a third reactor R3 for the separation or carbonization of biological organic waste (BOC), for example a cellulose containing waste material, as is known in the art Preferably, in this reaction step cellulose can be dissolved in the HMS, the solution of cellulose in HMS is separated and then cellulose is precipitated e.g. by addition of antisolvent and separated. Alternatively, the BOC can also be carbonized in reactor R3. Also after this step the HMS phase is separated after use for recycling. In this way an waste stream comprising TP and BOC can after separation of the TP and BOC be efficiently converted to useful products.

The NVC phase from the second reactor R2 can be separated continuously or semi-continuously, optionally followed by washing the NVC phase with water to remove residue of the molten salt, optionally followed by recycling part of the NVC phase, or of solid carbon isolated from the separated NVC phase, back to the first reactor as seed to enhance the conversion and/or separation of the NVC (not shown in Fig 1).

The HMS phase from the R2 and/or R3 is transferred to a fourth reactor R4 wherein the recycled used HMS phase is again converted by heating (T) to AMS and steam after which the AMS is recycled back to the first reactor R1, directly to R1 or indirectly via preheater PH2 and/or feed unit F. The steam generated in R4 can be used to purge in PH1, PH2 or other reactors or be recycled in the gas stream G1 to CR.

Optionally, in a fifth reactor R5 a base B can be added, either to (part of) the recycled HMS phase coming from reactor R2 and/or R3 and/or to (part of) the AMS coming from reactor R4, for converting metal of the molten metal salt to metal oxide which is separated and transferred to R1. The metal-oxide RE acts as reactant RE to capture heteroatom containing impurities formed in reactor R1. In the preferred embodiment wherein the molten salt is Zinc Chloride, in R5 Zinc Oxide is formed as RE. Optionally (not shown in Fig 1) instead of this optional step or in addition to this optional step in R5 other reactants RE can be separately added to the first reactor R1 for capturing heteroatom containing impurities formed in reactor R1.

Thus, the process of the invention, in this non-limiting example, converts a TPW feed with a high yield to a conversion gas stream G2 comprising a high percentage of hydrogen and solid carbon.

Further modifications in addition to those described above may be made to the structures and techniques described herein without departing from the spirit and scope of the invention. Accordingly, although specific embodiments have been described, these are examples only and are not limiting upon the scope of the invention.

## Claims

1. A process to convert a thermoplastic polymer containing waste (TPW) said process comprising the following steps:
a) Providing a reactor and the TPW and purging oxygen from the reactor and from the waste feed with steam,
b) contacting and mixing in the reactor the TPW with an anhydrous hydratable molten salt (AMS),
c) converting the TPW at a temperature T₁ between 200 °C to 500 °C and a pressure below 15 bar, preferably below 10 bar, in absence of oxygen and in presence of steam as inert gas forming a conversion gas and a reaction mixture comprising non-volatile conversion products including carbon (NVC) in the AMS,
d) collecting conversion gas from an outlet on the reactor, optionally assisted by purging with steam,
e) adding water or steam to the reaction mixture to cool the reaction mixture and convert the AMS to hydrated molten salt (HMS) whereby phase separation occurs between a NVC phase and a HMS phase,
i. wherein additionally cooling can be done by external cooling means,
f) separating the NVC phase from the HMS phase
i. wherein the cooling and separation steps e) and f) comprise one or more subsequent cooling and separation steps,
ii. wherein preferably the reaction mixture is cooled and hydrated to a temperature TI below 200 °C
iii. OR wherein at least part of the reaction mixture is cooled to a temperature Th above 200 °C, preferably above 300 °C, wherein optionally pressure is applied which pressure is preferably applied with steam,
iv. OR wherein two or more subsequent cooling and separation steps are applied at different temperatures, preferably first a step iii) at high temperature Th and then a step ii) at low temperature TI, wherein two or more different NVC fractions with different compositions are obtained,
g) heating the obtained HMS phase to convert to AMS and steam,
h) using AMS obtained in step g) in step b)
i) using the steam obtained in step g) in the process, preferably in step a) for purging oxygen from the reactor and/or in step e) for hydration of the AMS.

2. The process according to claims 1, wherein the TPW comprises at least 50, more preferably a least 60, 70, 80 or even more preferably at least 90 wt.% TP and preferably less than 40, more preferably less than 30 and even more preferably less than 20 wt.% of thermoset polymers and preferably also comprising less than 20 wt.% other waste feed components.

3. The process according to any of the preceding claims, wherein the AMS is a hydratable metal halide salt, wherein the metal preferably is Zinc, Aluminum, Antimony, Calcium, Iron or Magnesium or combinations thereof, preferably ZnCl₂, FeCl₃, or blends thereof, most preferably the AMS comprises at least 70 wt.%, more preferably at least 80 wt% even more preferably at least 90 wt% and most preferably at least 95 wt% ZnCl₂ with the remainder of the AMS preferably being one or more other metal halide salts, preferably AlCl₃, SbCl₃ or FeCl₃.

4. The process according to any of the preceding claims wherein the AMS in step b) comprises less than 20 wt.% hydrated water relative to the total weight of the AMS and water, preferably less than 10 wt%, more preferably less than 5 wt.% or even more preferably less than 1 wt% and wherein the HMS formed in step e) comprises between 10 and 60 wt.% water, preferably between 15 and 50 wt.% and more preferably between 15 and 35 wt.% wherein wt% is relative to the total weight of AMS and wherein preferably the AMS is ZnCl₂ and the HMS is ZnCl₂ hydrate and wherein the HMS preferably comprises at least 10, more preferably at least 20, even more preferably at least 30 wt% more water than the AMS relative to the total weight of the molten salt and water.

5. The process according to any of the preceding claims wherein a solid carbon source or a precursor thereof is added, preferably in step b) and/or e), as a seed to enhance the conversion and/or separation of the carbon phase from the molten salt phase.

6. The process according to any one of the preceding claims, further comprising separating the conversion gas collected in step d) into water, H₂ and C1-C4 hydrocarbons, optionally after cooling and condensation.

7. The process according to any one of the preceding claims wherein the molten salt further comprises catalytic amounts of one or more dehydrogenation catalyst metals different from the metal in the molten salt, preferably chosen from the group of Ni, Fe, Zn or Cu, to enhance hydrogen yield in the process, preferably added in the form of a metal-organic complex like metal alkyls, metal-oxides or a metal-chloride complex, and preferably in an amount of less than 10, preferably less than 5 or even less than 3 mole% of said metal relative to the moles of metal in the molten salt, wherein the one or more dehydrogenation catalyst are preferably chosen from the group of FeCl₃, NiCI, CuCl₂, Fe₂O₃, NiO and CuO and wherein the one or more dehydrogenation catalyst metals are optionally supported on a solid carbon source or a precursor thereof.

8. The process according to any one of the preceding claims wherein one or more reactants are added to the AMS to convert hetero-atom containing impurities formed during conversion step c) in particular to convert one or more of halogens, CO₂, SOx or NOx, wherein preferably the reactant forms a precipitate which can be separated, which reactant preferably is a metal compound, more preferably metal oxide or metal hydroxide, even more preferably zinc oxide, magnesium oxide, iron oxide or nickel oxide, to form one or more of metal-halogenides, metal-carbonates, metal-sulfates, or metal-nitrates, or wherein preferably the heteroatom is a halogen which is converted with a metal oxide, preferably Zinc-oxide, to convert to a metal halide, preferably Zinc-halide, which is part of the AMS used in the process and does not need to be separated.

9. The process according to any one of the preceding claims wherein the HMS produced in step e) is heated in step g) to a T₂ above 250 °C, preferably above 300 °C, wherein the HMS is converted into the AMS and steam.

10. The process according to any one of the preceding claims wherein the HMS produced in step e) is used in a separate step e.1) before being converted to AMS in step h) for the separation or carbonization of biological organic waste, preferably a biological organic waste comprising cellulose, hemicellulose and/or lignin, at a temperature below 300 °C, preferably below 250 °C.

11. The process according to any one of the preceding claims wherein the TPW comprises one or more TP selected from the group of polypropylene, Polyethylene, Polyester, Polyvinylacetate, Polyvinylalcohol, Polyvinylchloride or mixtures, copolymers, blends or composites thereof, preferably TP not comprising heteroatoms O, N or halogen, most preferably polyolefins.

12. The process according to any one of the preceding claims wherein the NVC phase separated in step f) is washed with water at a temperature below 100 °C to dissolve and remove residue of the molten salt and preferably recycling the wash water to step e).

13. The process according to any one of the preceding claims, wherein TPW is converted in a continuous process comprising continuously:
1) feeding a TPW feed and AMS to a first reactor and at least partly converting the TPW to the conversion gas and carbon in the reaction mixture,
2) taking the conversion gas from the top of the first reactor and separating and transferring part of the formed reaction mixture to a second reactor,
3) adding water or steam to the reaction mixture in the second reactor to cool the reaction mixture and convert the AMS to HMS forming a phase separated NVC phase and HMS phase,
4) separating and transferring the HMS phase out of the second reactor,
5) optionally transferring the HMS from the second reactor to a third reactor for the separation or carbonization of biological organic waste and separating the HMS after use in this step,
6) transferring the HMS from the second and/or third reactor to a fourth reactor and heating in the fourth reactor the HMS phase to convert to AMS and steam and recycling the AMS back to the first reactor,
7) wherein optionally impurities are removed from the HMS phase and/or from the obtained AMS prior to recycling back to the first reactor,
8) removing the NVC phase from the second reactor continuously or semi-continuously, optionally followed by washing the NVC phase with water to remove residue of the molten salt, optionally followed by recycling part of the NVC phase, or of solid carbon isolated from the separated NVC phase, back to the first reactor as seed to enhance the conversion and/or separation of the NVC.

14. The process according to any one of the preceding claims wherein at least part of the mixing and/or reaction is carried out in a static mixer, preferably a catalytic static mixer comprising catalytically active internal surfaces.
